# FASCICULE DE BREVET EUROPEEN

(11) **EP 4 158 236 B1**
(45) Date de publication et mention de la délivrance du brevet: **11.09.2024**
(21) Numéro de dépôt: 21734193.2
(22) Date de dépôt: 24.05.2021
(51) Int. Cl.: F16N 31/00, F16J 15/00, F16J 15/3204, F16J 15/34

(54) **LUBRIFICATION AMELIOREE POUR ETANCHEITE DE MACHINE HYDRAULIQUE**
VERBESSERTE SCHMIERUNG FÜR EINE HYDRAULISCHE MASCHINENDICHTUNG
IMPROVED LUBRICATION FOR HYDRAULIC MACHINE SEAL

(30) Priorité: 25.05.2020 FR 2005493
(43) Date de publication de la demande: 05.04.2023
(73) Titulaire: Poclain Hydraulics Industrie, 60410 Verberie (FR)
(72) Inventeur: FREY, Adam, 60410 VERBERIE (FR); JALABERT, Patrick, 60410 VERBERIE (FR); NACEUR, Laurent, 60410 VERBERIE (FR)
(74) Mandataire: Cabinet Beau de Loménie
(86) Numéro de dépôt international: PCT/FR2021/050942
(87) Numéro de publication internationale: WO 2021/240105

(56) Documents cités:
- EP-A1- 1 947 373
- EP-A1- 3 022 470
- EP-A1- 3 106 325
- EP-B1- 3 022 470
- EP-B1- 3 106 325
- WO-A1-2015/009150
- FR-A1- 3 075 252
- FR-A1- 3 080 576
- US-A- 4 196 910
- US-A- 4 268 229
- US-A1- 2003 221 911
- US-A1- 2018 347 704

## Description

### Domaine Technique

Le présent exposé concerne un dispositif d'étanchéité amélioré pour une machine hydraulique, et notamment un dispositif d'étanchéité pour lequel un système de lubrification amélioré est proposé.

### Technique antérieure

L'emploi de machines hydrauliques dans différents environnements pose des problématiques en termes d'étanchéité. En effet, une problématique récurrente est de prévenir l'admission d'impuretés dans un volume interne du carter de la machine hydraulique.

Différentes structures d'étanchéité ont été proposées afin d'assurer une bonne étanchéité entre le volume interne de la machine hydraulique et le milieu externe. Toutefois, les solutions connues demeurent problématiques en termes de fiabilité, notamment sur la durée.

Un premier montage consiste à placer un seul élément d'étanchéité axial assurant l'isolation entre le milieu ambiant et le volume interne du carter. Cependant, en cas d'élévation de pression dans le carter, l'élément d'étanchéité peut être expulsé de son logement, ou détruit, par exemple par déchirure ou par grippage des surfaces en contact glissant pour le cas d'étanchéité métalliques car la force d'appui entre deux parties glissantes augmente. Il s'en suit un frottement élevé et une perte de rendement dans le cas des joints métalliques. De telles élévations de pression de carter sont dues, par exemple à la mise en route d'une machine hydraulique froide. De l'huile sous pression arrive dans le carter de la machine, par les fuites internes habituelles dans ces machines, tandis que l'huile de carter ne peut s'échapper facilement par le tuyau de drain de carter qui est encore rempli d'huile froide et donc générant des pertes de charge très élevées du fait de la viscosité élevée de l'huile froide. De tels fonctionnements détruisent rapidement l'élément d'étanchéité. En particulier, si la pression s'élève dans le carter de la machine, la force d'appui entre des parties glissantes de l'élément d'étanchéité augmente, et il peut s'en suivre un grippage qui détruit l'élément d'étanchéité. Les composants de l'élément d'étanchéité peuvent également être détruits par la pression.

D'une manière alternative, les éléments d'étanchéité axiaux assurant l'isolation entre le l'intérieur et l'extérieur de la machine hydraulique peuvent être disposés dans des logements dédiés, ces logements étant eux-mêmes isolés du volume interne du carter comprenant la machine hydraulique, par exemple une machine hydraulique, par une étanchéité de carter communément qualifiée d'étanchéité absolue, associant un élément d'étanchéité dynamique tel qu'une bague à lèvre avec un élément d'étanchéité dynamique résistant à d'éventuels pics de pression, par exemple un joint torique couplé à un élément annulaire. Cependant, un tel montage définit ainsi une chambre fermée entre les éléments d'étanchéité axiaux et les éléments d'étanchéité de carter. Or, une telle chambre fermée pose une problématique en termes de lubrification. En effet, le logement comprenant les éléments d'étanchéité axiaux étant totalement isolé du volume interne du carter par l'étanchéité de carter, ce logement n'est pas lubrifié en continu. Or, un défaut de lubrification peut entraîner une destruction rapide des éléments d'étanchéité axiaux, notamment sous l'effet d'un grippage par manque d'huile ou un échauffement pouvant entraîner une montée en pression dans le logement, entrainant une expulsion de l'huile présente, ce qui accentue la problématique. Les solutions communément proposées consistent à insérer un volume d'huile prédéterminé dans ce logement, ce volume d'huile devant nécessairement être remplacé à intervalle régulier. On comprend cependant que de telles solutions sont fortement contraignantes et nécessitent des opérations de maintenance dédiées. Par ailleurs, ces solutions posent une problématique d'encombrement, pour le stockage d'un volume suffisant d'huile dans le logement, générant un encombrement axial qui n'est pas compatible avec des structures de machines hydrauliques qui répondent à des contraintes strictes en termes d'encombrement. Les documents EP3106325 et FR3080576 présentent deux exemples de machine hydraulique selon le préambule de la revendication 1.

Le présent exposé vise ainsi à répondre au moins partiellement à ces problématiques.

### Exposé de l'invention

Dans un premier mode de réalisation, le présent exposé propose une machine hydraulique telle que définie dans la revendication 1, comprenant un premier ensemble et un second ensemble mobiles en rotation l'un par rapport à l'autre autour d'un axe de rotation, le premier ensemble et le second ensemble définissant un volume interne et étant au contact selon une interface, l'interface entre le premier ensemble et le second ensemble étant munie d'un élément d'étanchéité positionné dans un logement relié au volume interne via un premier conduit d'une part, et au milieu ambiant via un second conduit d'autre part,
le premier conduit étant muni d'un élément d'étanchéité adapté pour isoler le logement du volume interne,
caractérisée en ce que ledit élément d'étanchéité est un élément d'étanchéité axial, comprenant un premier anneau métallique et un second anneau métallique, un premier anneau en élastomère et un second anneau en élastomère, dans lequel le premier anneau métallique et le second anneau métallique sont en appui l'un contre l'autre selon la direction axiale définie par l'axe de rotation, le premier anneau en élastomère est monté en appui contre le premier anneau métallique d'une part, et contre une cloison du premier ensemble, le second anneau en élastomère est monté en appui contre le second anneau métallique d'une part, et contre une cloison du second ensemble, qu'une cavité secondaire est formée dans le premier ensemble ou dans le second ensemble, ladite cavité secondaire étant reliée au logement, et isolée du volume interne, typiquement au moyen de perçages ou de conduits.

Selon un exemple, la cavité secondaire est formée dans une partie du carter de la machine hydraulique.

La machine hydraulique comprend par exemple au moins un roulement positionné dans le logement, en appui contre un premier épaulement formé dans le premier ensemble d'une part et un second épaulement formé dans le second ensemble d'autre part, la cavité secondaire débouchant dans le logement autour dudit roulement par rapport à l'axe de rotation.

Selon un exemple, la cavité secondaire s'étend selon un secteur angulaire de 360° autour de l'axe de rotation.

Selon le premier mode de réalisation, la cavité secondaire est reliée au logement via une pluralité de perçages formés dans le premier ensemble.

Selon le premier mode de réalisation, lesdits perçages s'étendent selon un secteur angulaire inférieur ou égal à 180° autour de l'axe de rotation.

Selon un exemple, le logement est alors formé de manière à s'étendre au moins partiellement autour d'un élément de roulement interposé entre le premier ensemble et le second ensemble, par rapport à l'axe de rotation.

Dans un second mode de réalisation, la présente invention présente une machine hydraulique telle que définie dans la revendication 7, comprenant un premier ensemble et un second ensemble mobiles en rotation l'un par rapport à l'autre autour d'un axe de rotation, le premier ensemble et le second ensemble définissant un volume interne et étant au contact selon une interface, l'interface entre le premier ensemble et le second ensemble étant munie d'un élément d'étanchéité positionné dans un logement relié au volume interne via un premier conduit d'une part, et au milieu ambiant via un second conduit d'autre part,
le premier conduit étant muni d'un élément d'étanchéité adapté pour isoler le logement du volume interne,
caractérisée en ce que ledit élément d'étanchéité est un élément d'étanchéité axial, comprenant un premier anneau métallique et un second anneau métallique, un premier anneau en élastomère et un second anneau en élastomère, dans lequel le premier anneau métallique et le second anneau métallique sont en appui l'un contre l'autre selon la direction axiale définie par l'axe de rotation, le premier anneau en élastomère est monté en appui contre le premier anneau métallique d'une part, et contre une cloison du premier ensemble, le second anneau en élastomère est monté en appui contre le second anneau métallique d'une part, et contre une cloison du second ensemble, qu'une cavité secondaire est formée dans un arbre de la machine hydraulique, ladite cavité secondaire étant reliée au logement, et isolée du volume interne, typiquement au moyen de perçages ou de conduits.

Selon le second mode de réalisation, la cavité secondaire est reliée au logement via une pluralité de perçages disjoints formés dans l'arbre.

Selon un exemple, la cavité secondaire est dimensionnée de manière à ce que le volume total du logement et de la cavité secondaire soit supérieur ou égal à 300 mL.

Selon un exemple, la cavité secondaire est reliée au milieu ambiant via un orifice secondaire, ledit orifice secondaire étant muni d'un bouchon.

La machine hydraulique est par exemple une machine hydraulique, comprenant un bloc cylindres muni d'une pluralité de logement s'étendant radialement par rapport à l'axe de rotation dans lesquels sont disposés des cylindres, et une came multilobes entourant le bloc cylindres. Une telle machine hydraulique peut par exemple présenter un fonctionnement de moteur hydraulique ou de pompe hydraulique.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente une vue en coupe d'une partie de machine hydraulique selon un aspect de l'invention.
[Fig. 2] La figure 2 est une vue en perspective d'un exemple de noyau de fonderie pouvant être employé pour former la machine hydraulique telle que présentée sur la figure 1.
[Fig. 3] La figure 3 est une vue partielle en coupe d'un autre exemple de machine hydraulique selon un aspect de l'invention.

Sur l'ensemble des figures, les éléments en commun sont repérés par des références numériques identiques.

### Description des modes de réalisation

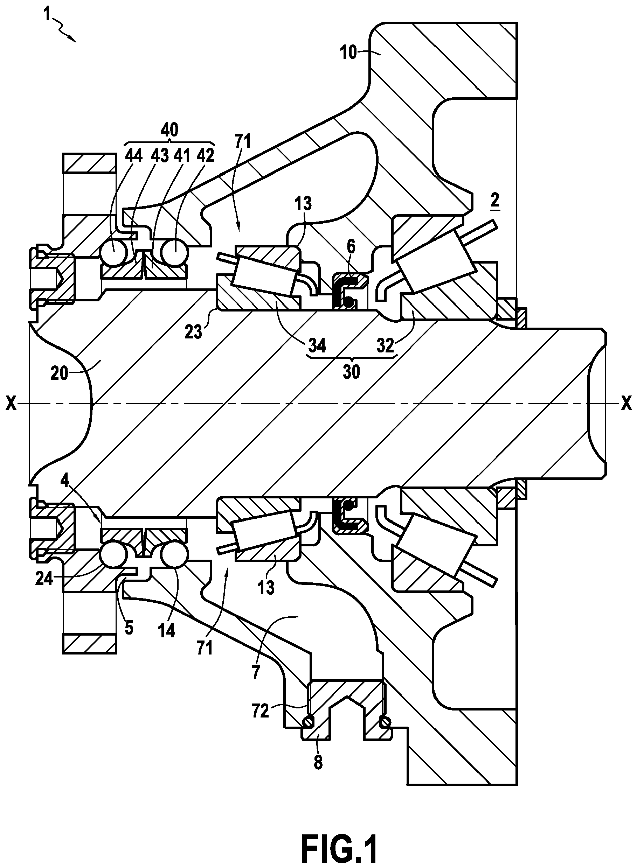

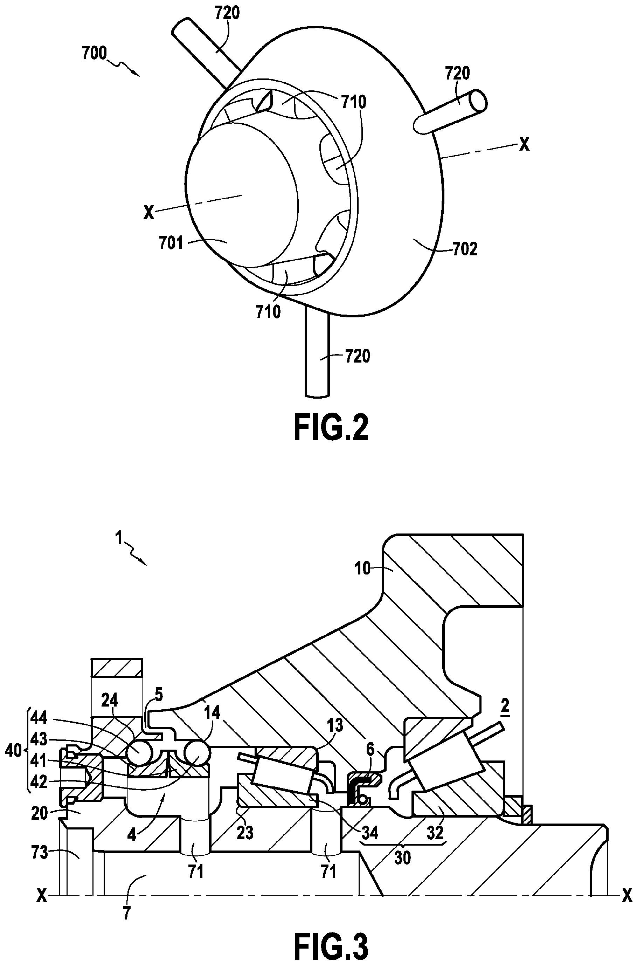

On décrit à présent un exemple de réalisation de l'invention, en référence notamment aux figures 1 et 2.

On représente sur la figure 1 une vue partielle en coupe d'une machine hydraulique 1. La machine hydraulique 1 comprend un premier ensemble 10 et un second ensemble 20 mobiles en rotation l'un par rapport à l'autre selon un axe de rotation X-X. Dans la description qui suit, les désignations « radiale » et « axiale » sont définies par rapport à l'axe de rotation X-X sauf mention contraire.

Dans l'exemple illustré, le guidage en rotation est assuré par des éléments de roulement, ici des roulements coniques 32 et 34 formant un palier 30. On comprend que cet exemple de réalisation n'est pas limitatif, et que les éléments de roulement peuvent être de tous types. La machine hydraulique 1 comprend un volume interne 2 dans lequel sont disposés différents composants en fonction de sa nature, par exemple un moteur hydraulique à pistons radiaux ou à pistons axiaux, une pompe hydraulique à pistons radiaux ou à pistons axiaux, un système de freinage, ou tout autre appareil présentant deux ensembles en rotation l'un par rapport à l'autre.

Le premier ensemble 10 et le second ensemble 20 désignent les différents composants de la machine hydraulique 1. A titre d'exemple, l'un de ces ensembles peut comprendre un arbre et un bloc cylindres d'une machine hydraulique, tandis que l'autre de ces ensembles peut comprendre une came multilobes et un distributeur d'une machine hydraulique. Le premier ensemble 10 et le second ensemble 20 peuvent comprendre des moyens de freinage, par exemple des disques adaptés pour prévenir le mouvement en rotation relatif du premier ensemble 10 par rapport au second ensemble 20 sous l'effet de frottements entre lesdits disques.

Pour une telle machine hydraulique, on définit communément un circuit hydraulique de puissance, auquel sont reliés des conduits d'aspiration et de refoulement, des conduits du distributeur et les chambres à piston du bloc cylindres. Ledit circuit hydraulique de puissance comprenant typiquement une pompe hydraulique définissant des branches aller et retour, ou branche haute pression HP et basse pression BP, dans un circuit hydraulique qui peut être en boucle ouverte ou en boucle fermée. Le circuit hydraulique de puissance assure la transmission de la puissance motrice hydraulique.

On définit également pour une telle machine hydraulique un volume interne 2, qui correspond au volume contenu dans le carter autour des différents éléments de la machine hydraulique 1. Le volume interne2 est isolé du circuit hydraulique de puissance par des étanchéités, typiquement des étanchéités des pistons et du distributeur d'une manière connue de l'homme de l'art. Le volume interne 2 de la machine hydraulique reçoit un débit d'huile provenant des fuites internes de la machine hydraulique en provenance du circuit de puissance, et il est typiquement raccordé par un drain à un réservoir pour évacuer ce débit d'huile, de manière à ce que la pression dans le volume interne de la machine hydraulique reste sensiblement égale à la pression dudit réservoir, qui est typiquement égale à ou proche de la pression atmosphérique.

Le volume interne 2 de la machine hydraulique 1 est isolé du milieu externe via un premier élément d'étanchéité 40 disposé dans un logement 4. Le logement 4 est relié au milieu externe via un conduit 5. Dans l'exemple illustré, le premier élément d'étanchéité 40 est un joint axial, ou joint à glace, communément désigné par l'appellation joint duo-cône.

Le premier élément d'étanchéité 40 comprend ici un premier anneau métallique 41 et un second anneau métallique 43, réalisés en matériau métallique, et qui sont typiquement symétriques par rapport à un plan s'étendant radialement par rapport à l'axe de rotation X-X. Le premier élément d'étanchéité 40 comprend également un premier anneau en élastomère 42 et un second anneau en élastomère 44, réalisés en matériau élastomère.

Le premier anneau métallique 41 et le second anneau métallique 43 sont en appui l'un contre l'autre selon la direction axiale définie par l'axe de rotation X-X.

Le premier anneau en élastomère 42 est monté en appui contre le premier anneau métallique 41 d'une part, et contre une cloison 14 du premier ensemble 10.

Le second anneau en élastomère 44 est monté en appui contre le second anneau métallique 43 d'une part, et contre une cloison 24 du second ensemble 20.

Le premier anneau en élastomère 42 et le second anneau en élastomère 44 sont typiquement positionnés radialement à l'extérieur par rapport au premier anneau métallique 41 et au second anneau métallique 43. Le premier anneau métallique 41 et le second anneau métallique 43 viennent comprimer le premier anneau en élastomère 42 et le second anneau en élastomère 44 contre les cloisons 14 et 24 respectivement du premier ensemble 10 et du second ensemble 20, et ainsi assurer une liaison étanche.

Le premier anneau métallique 41, le second anneau métallique 43 ainsi que les cloisons 14 et 24 respectivement du premier ensemble 10 et du second ensemble 20 sont typiquement formés de manière à ce que le premier anneau en élastomère 42 et le second anneau en élastomère 44 tendent à déplacer le premier anneau métallique 41 et le second anneau métallique 43 l'un contre l'autre selon la direction axiale définie par l'axe de rotation X-X.

Comme indiqué précédemment, une problématique de ce type de montage concerne la lubrification du premier élément d'étanchéité 40. En effet, dans les structures conventionnelles, le logement 4 est typiquement isolé du volume interne 2 par une étanchéité qualifiée d'absolue, qui comprend communément un joint d'étanchéité dynamique tel qu'une bague à lèvre, couplé à une étanchéité renforcée adaptée notamment pour supporter d'éventuels pics de pression. Cependant, un tel montage isole totalement le logement 4 du volume interne 2, ce qui nécessite donc de prévoir une lubrification dès la conception, par exemple en insérant une quantité prédéterminée d'huile dans le logement 4. Cependant, cela impose des opérations de maintenance régulière afin de réintroduire de l'huile dans le logement 4, dans la mesure où l'huile s'échappe au fur et à mesure vers le milieu extérieur. En outre, les machines hydrauliques telles que les machines ou appareils hydrauliques ont communément des contraintes importantes en termes d'encombrement axial, ce qui ne permet pas de disposer d'un volume suffisant pour assurer une lubrification du premier élément d'étanchéité 40 et d'éviter d'éventuelles montées en pression dans le logement 4 du fait de l'échauffement de la quantité réduite d'huile s'y trouvant. Or, un tel élément d'étanchéité 40 qui comprend deux éléments métalliques en rotation l'un par rapport à l'autre nécessite une lubrification nettement plus élevée que des éléments d'étanchéité dynamiques tels que des bagues à lèvres, et nécessite donc des solutions spécifiques. Les solutions usuelles proposées pour des joints dynamiques autres ne permettent en effet pas d'assurer une lubrification suffisante pour de tels éléments d'étanchéité.

Afin de répondre à ces problématiques, la structure telle que proposée comprend une cavité secondaire 7, formée dans le premier ensemble 10 ou dans le second ensemble 20, et reliée au logement 4 de manière à fournir un volume de réserve additionnel, sans avoir d'impact sur l'encombrement axial de la machine hydraulique 1. La cavité secondaire 7 est reliée au logement 4 via une pluralité de conduits ou de passages, qui peuvent par exemple être venus de fonderie, ou usinés, par exemple réalisés par perçage.

Le logement 4 est ici isolé du volume interne 2 par un second élément d'étanchéité 6, par exemple un joint dynamique du type bague à lèvre. Ce second élément d'étanchéité 6 délimite ainsi la séparation entre le logement 4 et le volume interne 2.

Le palier 30 est ici formé par les deux éléments de roulement 32 et 34, qui sont disposés de part et d'autre du second élément d'étanchéité 6. L'élément de roulement 34 est ainsi disposé dans le logement 4, tandis que l'élément de roulement 32 est disposé dans le volume interne 2.

Dans le mode de réalisation représenté sur la figure 1, la cavité secondaire 7 est formée dans le premier ensemble 10, ici plus précisément dans une portion d'un carter de la machine hydraulique 1 qui fait partie du premier ensemble 10, et qui est au moins partiellement autour de l'élément de roulement 34. Le composant considéré peut être sensiblement modifié de manière à augmenter son encombrement radial pour permettre de former une cavité secondaire 7 ayant un volume suffisant. La cavité secondaire 7 est typiquement venue de fonderie.

Plus précisément, l'élément de roulement 34 est en appui contre un épaulement 13 du premier ensemble 10 d'une part, et contre un épaulement 23 du second ensemble 20 d'autre part. Un volume du premier ensemble 10 est évidé de manière à former la cavité secondaire 7. Ce volume s'étend notamment radialement autour de l'élément de roulement 34.

La cavité secondaire 7 s'étend typiquement sur un secteur angulaire de 360 ° autour de l'axe de rotation X-X. En variante, la cavité secondaire 7 peut ne s'étendre que sur un secteur angulaire limité autour de l'axe de rotation X-X, par exemple sur un secteur angulaire inférieur ou égal à 180°.

Comme on le voit sur la figure, la cavité secondaire 7 telle que représentée s'étend au moins partiellement autour d'au moins un des éléments de roulement, ici l'élément de roulement 34, par rapport à l'axe de rotation X-X. Une telle configuration est avantageuse en termes de compacité, car elle ne nécessite pas d'allonger l'ensemble selon la direction de l'axe de rotation X-X.

La cavité secondaire 7 est reliée au logement 4 via une pluralité de perçages 71 disjoints formés dans le premier ensemble 10, ou dans une nervure continue s'étendant sur toute la périphérie d'une face du volume interne 4. Les perçages 71 tels que représentés sont formés de manière à s'étendre en partie autour d'une face externe d'une bague externe de l'élément de roulement 34, sans affecter son maintien par l'épaulement 13.

La cavité secondaire 7 est munie d'un orifice secondaire 72 débouchant sur le milieu ambiant, cet orifice secondaire 72 étant obturé par un bouchon 8.

La figure 2 présente une vue en perspective d'un noyau de fonderie pour la formation de la cavité secondaire 7 dans une partie du carter de machine hydraulique tel que représenté sur la figure 1 ; ce noyau de fonderie 700 permettant ainsi de visualiser un exemple de géométrie pour la cavité secondaire 7.

Le noyau de fonderie 700 tel que représenté comprend une portion centrale 701 et une portion périphérique 702. La portion centrale 701 définit une cavité centrale d'une partie de carter, tandis que la portion périphérique définit la forme de la cavité secondaire 7. Comme La portion centrale 701 est ici reliée à la portion périphérique 702 via une pluralité de conduits radiaux 710, ces conduits radiaux 710 définissant ici les perçages 71 disjoints mentionnés précédemment, reliant la cavité secondaire 7 au logement 4.

On comprend que le nombre et la répartition des conduits radiaux 710, et donc des perçages 71 peuvent varier. Dans l'exemple illustré, les perçages 71 sont répartis régulièrement autour de l'axe de rotation X-X, sur toute la périphérie interne d'un composant du premier ensemble 10 tel qu'une partie de carter. En variante, les perçages 71 peuvent ne s'étendre que sur un secteur angulaire limité autour de l'axe de rotation X-X, par exemple de manière à ce qu'un secteur angulaire correspondant à une zone du premier ensemble 10 soumis à des contraintes mécaniques plus élevées ne présente pas de perçages 71. A titre d'exemple, les perçages 71 s'étendent uniquement sur un secteur angulaire inférieur ou égal à 180° autour de l'axe de rotation X-X, par exemple un secteur angulaire opposé à un point d'ancrage de la machine hydraulique 1 ou à un point de fixation d'équipements ou d'éléments entrainés par la machine hydraulique 1, par exemple un point d'ancrage de chenilles entrainées par la machine hydraulique 1.

Le noyau 700 tel que représenté sur la figure 2 comprend des cheminées 720 s'étendant radialement autour de la portion périphérique 702. Ces cheminées 720 permettent notamment de former un ou plusieurs orifices secondaires 72 tels que mentionnés précédemment.

Les orifices secondaires 72 permettent notamment de former des orifices de remplissage et/ou de vidange pour l'huile présente dans la cavité secondaire 7 et dans le logement 4, et assurent donc un accès simplifié pour ces opérations, sans nécessiter un démontage de la machine hydraulique 1.

La cavité secondaire 7 est typiquement dimensionnée de manière à ce que le volume cumulé du logement 4 et de la cavité secondaire 7 permette de recevoir 150 mL ou plus d'huile, en conservant un volume d'air conforme aux recommandations pour les éléments d'étanchéité considérés, par exemple au moins 30% ou au moins 50% du volume rempli d'air, et par exemple moins de 75% du volume rempli d'air. Le volume cumulé du logement 4 et de la cavité secondaire 7 est ainsi typiquement supérieur à 200 mL, à 220 mL ou à 300 mL.

La cavité secondaire 7 peut présenter des nervures radiales, notamment pour renforcer les propriétés mécaniques du composant dans lequel la cavité secondaire 7 est formée. La cavité secondaire 7 peut ainsi être segmentée en plusieurs cavités disjointes, ces différentes cavités étant reliées au logement 4 via les perçages 71.

La structure ainsi proposée de machine hydraulique, comprenant une cavité secondaire 7 telle que définie précédemment, permet de répondre aux problématiques mentionnées précédemment, à savoir assurer une lubrification suffisante du premier élément d'étanchéité 40 présent dans le logement 4 tout en évitant d'augmenter l'encombrement de la machine hydraulique selon la direction axiale. Le mode de réalisation représenté comprenant les orifices secondaires 72 permet également de simplifier les opérations de vidange et d'ajout d'huile dans la cavité secondaire 7 et dans le logement 4, sans nécessiter un démontage de la machine hydraulique 1.

La figure 3 présente un autre exemple de mode de réalisation de machine hydraulique 1 selon un aspect du présent exposé.

Dans ce mode de réalisation, la cavité secondaire 7 est formée dans un composant du second ensemble 20, à savoir un arbre de machine hydraulique dans l'exemple illustré.

Dans ce mode de réalisation, la cavité secondaire 7 est formée par un perçage réalisé dans un arbre qui est ici un composant du second ensemble 20, ledit perçage étant borgne, et débouchant à une extrémité libre de la machine hydraulique 1. L'extrémité débouchante 73 de la cavité secondaire 7 peut être obturée par un bouchon qu'il faut placer au niveau du logement 73 tel qu'une plaque de fermeture, ou par tout autre moyen adapté, non représenté sur la figure 3.

La cavité secondaire 7 est reliée au logement 4 via des perçages 71 radiaux réalisés dans l'arbre. Dans l'exemple illustré, la cavité secondaire 7 présente des perçages 71 formés de part et d'autre de l'élément de roulement 34. Un ou plusieurs perçages 71 disjoints peuvent ainsi être réalisés dans l'arbre de la machine hydraulique 1. On comprend que ce mode de réalisation n'est pas limitatif, et que la cavité secondaire 7 formée dans l'arbre peut être reliée au logement 4 via un nombre quelconque de perçages 71, qui peuvent s'étendre radialement ou non.

Les fonctionnalités de la cavité secondaire 7 sont similaires aux fonctionnalités déjà décrites précédemment en référence aux figures 1 et 2, à savoir assurer une lubrification suffisante des éléments disposés dans le logement 4, sans augmenter l'encombrement axial de la machine hydraulique 1.

Selon un exemple, le volume de la cavité secondaire 7 est supérieur ou égal au volume du logement 4.

Le mode de réalisation représenté sur la figure 3 peut notamment être employé dans des machines hydrauliques dont l'arbre n'est pas soumis à des charges élevées.

Les différents modes de réalisation présentés permettent ainsi de répondre aux problématiques de lubrification des éléments assurant l'étanchéité de la machine hydraulique par rapport au milieu ambiant, sans nécessiter une augmentation de l'encombrement radial.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Machine hydraulique (1) comprenant un premier ensemble (10) et un second ensemble (20) mobiles en rotation l'un par rapport à l'autre autour d'un axe de rotation (X-X), le premier ensemble (10) et le second ensemble (20) définissant un volume interne (2) et étant au contact selon une interface, l'interface entre le premier ensemble (10) et le second ensemble (20) étant munie d'un élément d'étanchéité (40) positionné dans un logement (4) relié au volume interne (2) via un premier conduit d'une part, et au milieu ambiant via un second conduit (5) d'autre part,
le premier conduit étant muni d'un élément d'étanchéité (6) adapté pour isoler le logement (4) du volume interne (2),
**caractérisée en ce que** ledit élément d'étanchéité (40) à l'interface entre le premier ensemble (10) et le second ensemble (20) est un élément d'étanchéité axial, comprenant un premier anneau métallique (41) et un second anneau métallique (43), un premier anneau en élastomère (42) et un second anneau en élastomère (44), dans lequel le premier anneau métallique (41) et le second anneau métallique (43) sont en appui l'un contre l'autre selon la direction axiale définie par l'axe de rotation (X-X), le premier anneau en élastomère (42) est monté en appui contre le premier anneau métallique (41) d'une part, et contre une cloison (14) du premier ensemble (10), le second anneau en élastomère (44) est monté en appui contre le second anneau métallique (43) d'une part, et contre une cloison (24) du second ensemble (20),
et **en ce qu'**une cavité secondaire (7) est formée dans le premier ensemble (10) ou dans le second ensemble (20), ladite cavité secondaire (7) étant reliée au logement (4) via une pluralité de perçages (71) formés dans le premier ensemble (10), et isolée du volume interne (2), lesdits perçages (71) s'étendent sur un secteur angulaire inférieur ou égal à 180° autour de l'axe de rotation (X-X).

2. Machine hydraulique (1) selon la revendication 1, dans laquelle la cavité secondaire (7) est formée dans une partie de carter de la machine hydraulique (1).

3. Machine hydraulique (1) selon l'une des revendications 1 ou 2, comprenant au moins un roulement (34) positionné dans le logement (4), en appui contre un premier épaulement (13) formé dans le premier ensemble (10) d'une part et un second épaulement (23) formé dans le second ensemble (20) d'autre part, la cavité secondaire (7) débouchant dans le logement (4) autour dudit roulement (34) par rapport à l'axe de rotation (X-X).

4. Machine hydraulique (1) selon l'une des revendications 1 à 3, dans laquelle la cavité secondaire (7) s'étend selon un secteur angulaire de 360° autour de l'axe de rotation (X-X).

5. Machine hydraulique (1) selon l'une des revendications 1 à 4, dans lequel le logement (4) est formé de manière à s'étendre au moins partiellement autour d'un élément de roulement (34) interposé entre le premier ensemble (10) et le second ensemble (20), par rapport à l'axe de rotation (X-X).

6. Machine hydraulique (1) comprenant un premier ensemble (10) et un second ensemble (20) mobiles en rotation l'un par rapport à l'autre autour d'un axe de rotation (X-X), le premier ensemble (10) et le second ensemble (20) définissant un volume interne (2) et étant au contact selon une interface, l'interface entre le premier ensemble (10) et le second ensemble (20) étant munie d'un élément d'étanchéité (40) positionné dans un logement (4) relié au volume interne (2) via un premier conduit d'une part, et au milieu ambiant via un second conduit (5) d'autre part, le premier conduit étant muni d'un élément d'étanchéité (6) adapté pour isoler le logement (4) du volume interne (2),
**caractérisée en ce que** ledit élément d'étanchéité (40) à l'interface entre le premier ensemble (10) et le second ensemble (20) est un élément d'étanchéité axial, comprenant un premier anneau métallique (41) et un second anneau métallique (43), un premier anneau en élastomère (42) et un second anneau en élastomère (44), dans lequel le premier anneau métallique (41) et le second anneau métallique (43) sont en appui l'un contre l'autre selon la direction axiale définie par l'axe de rotation (X-X), le premier anneau en élastomère (42) est monté en appui contre le premier anneau métallique (41) d'une part, et contre une cloison (14) du premier ensemble (10), le second anneau en élastomère (44) est monté en appui contre le second anneau métallique (43) d'une part, et contre une cloison (24) du second ensemble (20),
et **en ce qu'**une cavité secondaire (7) est formée dans un arbre de la machine hydraulique (1), ladite cavité secondaire (7) étant reliée au logement (4) via une pluralité de perçages (71) disjoints formés dans l'arbre, et isolée du volume interne (2).

7. Machine hydraulique (1) selon l'une des revendications 1 à 6, dans laquelle la cavité secondaire (7) est dimensionnée de manière à ce que son volume soit supérieur ou égal au volume du logement (4).

8. Machine hydraulique (1) selon l'une des revendications 1 à 7, dans laquelle la cavité secondaire (7) est reliée au milieu ambiant via un orifice secondaire (72), ledit orifice secondaire étant muni d'un bouchon (8).

## Patentansprüche

1. Hydraulische Maschine (1), umfassend eine erste Baugruppe (10) und eine zweite Baugruppe (20), die in Bezug aufeinander um eine Drehachse (X-X) drehbeweglich sind, wobei die erste Baugruppe (10) und die zweite Baugruppe (20) ein Innenvolumen (2) definieren und gemäß einer Grenzfläche in Kontakt stehen, wobei die Grenzfläche zwischen der ersten Baugruppe (10) und der zweiten Baugruppe (20) mit einem Dichtelement (40) versehen ist, das in einer Aufnahme (4) positioniert ist, die einerseits mit dem Innenvolumen (2) über eine erste Leitung und andererseits mit der Umgebung über eine zweite Leitung (5) verbunden ist, wobei die erste Leitung mit einem Dichtelement (6) versehen ist, das dazu geeignet ist, die Aufnahme (4) von dem Innenvolumen (2) zu isolieren,
**dadurch gekennzeichnet, dass** das Dichtelement (40) an der Grenzfläche zwischen der ersten Baugruppe (10) und der zweiten Baugruppe (20) ein axiales Dichtelement ist, umfassend einen ersten Metallring (41) und einen zweiten Metallring (43), einen ersten Elastomerring (42) und einen zweiten Elastomerring (44), wobei der erste Metallring (41) und der zweite Metallring (43) gemäß der durch die Drehachse (X-X) definierten Axialrichtung gegeneinander gelagert sind, wobei der erste Elastomerring (42) einerseits gegen den ersten Metallring (41) und gegen eine Trennwand (14) der ersten Baugruppe (10) gelagert ist, wobei der zweite Elastomerring (44) einerseits gegen den zweiten Metallring (43) und gegen eine Trennwand (24) der zweiten Baugruppe (20) gelagert ist,
und dass ein sekundärer Hohlraum (7) in der ersten Baugruppe (10) oder in der zweiten Baugruppe (20) ausgebildet ist, wobei der sekundäre Hohlraum (7) mit der Aufnahme (4) über mehrere Bohrungen (41), die in der ersten Baugruppe (10) ausgebildet sind, verbunden ist und von dem Innenvolumen (2) isoliert ist, wobei sich die Bohrungen (71) über einen Winkelsektor von kleiner oder gleich 180° um die Drehachse (X-X) erstrecken.

2. Hydraulische Maschine (1) nach Anspruch 1, wobei der sekundäre Hohlraum (7) in einem Gehäuseteil der hydraulischen Maschine (1) ausgebildet ist.

3. Hydraulische Maschine (1) nach einem der Ansprüche 1 oder 2, umfassend mindestens ein Rollenlager (34), das in der Aufnahme (4) positioniert ist und einerseits gegen einen ersten Anschlag (13), der in der ersten Baugruppe (10) ausgebildet ist, und andererseits einen zweiten Anschlag (23), der in der zweiten Baugruppe (20) ausgebildet ist, gelagert ist, wobei der sekundäre Hohlraum (7) in die Aufnahme (4) um das Rollenlager (34) in Bezug auf die Drehachse (X-X) mündet.

4. Hydraulische Maschine (1) nach einem der Ansprüche 1 bis 3, wobei sich der sekundäre Hohlraum (7) gemäß einem Winkelsektor von 360° um die Drehachse (X-X) erstreckt.

5. Hydraulische Maschine (1) nach einem der Ansprüche 1 bis 4, wobei die Aufnahme (4) derart ausgebildet ist, dass sie sich zumindest teilweise um ein Rollenlagerelement (34), das zwischen der ersten Baugruppe (10) und der zweiten Baugruppe (20) eingefügt ist, in Bezug auf die Drehachse (X-X) erstreckt.

6. Hydraulische Maschine (1), umfassend eine erste Baugruppe (10) und eine zweite Baugruppe (20), die in Bezug aufeinander um eine Drehachse (X-X) drehbeweglich sind, wobei die erste Baugruppe (10) und die zweite Baugruppe (20) ein Innenvolumen (2) definieren und gemäß einer Grenzfläche in Kontakt stehen, wobei die Grenzfläche zwischen der ersten Baugruppe (10) und der zweiten Baugruppe (20) mit einem Dichtelement (40) versehen ist, das in einer Aufnahme (4) positioniert ist, die einerseits mit dem Innenvolumen (2) über eine erste Leitung und andererseits mit der Umgebung über eine zweite Leitung (5) verbunden ist, wobei die erste Leitung mit einem Dichtelement (6) versehen ist, das dazu geeignet ist, die Aufnahme (4) von dem Innenvolumen (2) zu isolieren,
**dadurch gekennzeichnet, dass** das Dichtelement (40) an der Grenzfläche zwischen der ersten Baugruppe (10) und der zweiten Baugruppe (20) ein axiales Dichtelement ist, umfassend einen ersten Metallring (41) und einen zweiten Metallring (43), einen ersten Elastomerring (42) und einen zweiten Elastomerring (44), wobei der erste Metallring (41) und der zweite Metallring (43) gemäß der durch die Drehachse (X-X) definierten Axialrichtung gegeneinander gelagert sind, wobei der erste Elastomerring (42) einerseits gegen den ersten Metallring (41) und gegen eine Trennwand (14) der ersten Baugruppe (10) gelagert ist, wobei der zweite Elastomerring (44) einerseits gegen den zweiten Metallring (43) und gegen eine Trennwand (24) der zweiten Baugruppe (20) gelagert ist,
und dass ein sekundärer Hohlraum (7) in einer Welle der hydraulischen Maschine (1) ausgebildet ist, wobei der sekundäre Hohlraum (7) mit der Aufnahme (4) über mehrere gentrennte Bohrungen (71), die in der Welle ausgebildet sind, verbunden ist und von dem Innenvolumen (2) isoliert ist.

7. Hydraulische Maschine (1) nach einem der Ansprüche 1 bis 6, wobei der sekundäre Hohlraum (7) derart dimensioniert ist, dass dessen Volumen größer oder gleich dem Volumen der Aufnahme (4) ist.

8. Hydraulische Maschine (1) nach einem der Ansprüche 1 bis 7, wobei der sekundäre Hohlraum (7) mit der Umgebung über eine sekundäre Öffnung (72) verbunden ist, wobei die sekundäre Öffnung mit einem Stopfen (8) versehen ist.

## Claims

1. A hydraulic machine (1) comprising a first assembly (10) and a second assembly (20) movable in rotation relative to each other about an axis of rotation (X-X), the first assembly (10) and the second assembly (20) defining an internal volume (2) and being in contact along an interface, the interface between the first assembly (10) and the second assembly (20) being provided with a sealing element (40) positioned in a housing (4) connected to the internal volume (2) via a first duct on the one hand, and to the surrounding environment via a second duct (5) on the other hand,
the first duct being provided with a sealing element (6) adapted to isolate the housing (4) from the internal volume (2),
**characterized in that** said sealing element (40) at the interface between the first assembly (10) and the second assembly (20) is an axial sealing element comprising a first metal annulus (41) and a second metal annulus (43), a first elastomeric annulus (42) and a second elastomeric annulus (44), wherein the first metal annulus (41) and the second metal annulus (43) are bearing against each other along the axial direction defined by the axis of rotation (X-X), the first elastomeric annulus (42) is mounted bearing against the first metal annulus (41) on the one hand, and against a partition wall (14) of the first assembly (10) on the other hand, the second elastomeric annulus (44) is mounted bearing against the second metal annulus (43) on the one hand, and against a partition wall (24) of the second assembly (20) on the other hand,
and **in that** a secondary cavity (7) is formed in the first assembly (10) or in the second assembly (20), said secondary cavity (7) being connected to the housing (4) via a plurality of bores (71) formed in the first assembly (10), and isolated from the internal volume (2), said bores (71) extend over an angular sector less than or equal to 180° about the axis of rotation (X-X).

2. The hydraulic machine (1) according to claim 1, wherein the secondary cavity (7) is formed in a portion of the crankcase of the hydraulic machine (1).

3. The hydraulic machine (1) according to any of claims 1 or 2, comprising at least one bearing (34) positioned in the housing (4), bearing against a first shoulder (13) formed in the first assembly (10) on the one hand and a second shoulder (23) formed in the second assembly (20) on the other hand, the secondary cavity (7) opening out into the housing (4) around said bearing (34) relative to the axis of rotation (X-X).

4. The hydraulic machine (1) according to any of claims 1 to 3, wherein the secondary cavity (7) extends according to an angular sector of 360° about the axis of rotation (X-X).

5. The hydraulic machine (1) according to any of claims 1 to 4, wherein the housing (4) is formed so as to extend at least partially around a rolling element (34) interposed between the first assembly (10) and the second assembly (20), relative to the axis of rotation (X-X).

6. The hydraulic machine (1) comprising a first assembly (10) and a second assembly (20) movable in rotation relative to each other about an axis of rotation (X-X), the first assembly (10) and the second assembly (20) defining an internal volume (2) and being in contact along an interface, the interface between the first assembly (10) and the second assembly (20) being provided with a sealing element (40) positioned in a housing (4) connected to the internal volume (2) via a first duct on the one hand, and to the surrounding environment via a second duct (5) on the other hand,
the first duct being provided with a sealing element (6) adapted to isolate the housing (4) from the internal volume (2),
**characterized in that** said sealing element (40) at the interface between the first assembly (10) and the second assembly (20) is an axial sealing element comprising a first metal annulus (41) and a second metal annulus (43), a first elastomeric annulus (42) and a second elastomeric annulus (44), wherein the first metal annulus (41) and the second metal annulus (43) are bearing against each other along the axial direction defined by the axis of rotation (X-X), the first elastomeric annulus (42) is mounted bearing against the first metal annulus (41) on the one hand, and against a partition wall (14) of the first assembly (10) on the other hand, the second elastomeric annulus (44) is mounted bearing against the second metal annulus (43) on the one hand, and against a partition wall (24) of the second assembly (20) on the other hand,
and **in that** a secondary cavity (7) is formed in the first assembly (10) or in the second assembly (20), said secondary cavity (7) being connected to the housing (4) via a plurality of separate bores (71) formed in the shaft, and isolated from the internal volume (2).

7. The hydraulic machine (1) according to any of claims 1 to 6, wherein the secondary cavity (7) is dimensioned such that its volume is greater than or equal to the volume of the housing (4).

8. The hydraulic machine (1) according to any of claims 1 to 7, wherein the secondary cavity (7) is connected to the surrounding environment via a secondary orifice (72), said secondary orifice being provided with a plug (8).
